# EUROPEAN PATENT SPECIFICATION

(11) **EP 3 592 151 B1**
(45) Date of publication and mention of the grant of the patent: **29.09.2021**
(21) Application number: 18711193.5
(22) Date of filing: 19.02.2018
(51) Int. Cl.: A21D 2/18, A21D 13/066, A23L 29/262

(54) **COMPOSITION COMPRISING GLUTEN-FREE FLOUR AND HYDROXYPROPYL METHYL CELLULOSE**
ZUSAMMENSETZUNG MIT GLUTENFREIEM MEHL UND HYDROXYPROPYLMETHYLCELLULOSE
COMPOSITION COMPRENANT DE LA FARINE SANS GLUTEN ET DE L'HYDROXYPROPYLMÉTHYLCELLULOSE

(30) Priority: 06.03.2017 US 201762467360 P
(43) Date of publication of application: 15.01.2020
(73) Proprietor: Dow Global Technologies LLC, Midland, MI 48674 (US)
(72) Inventor: MAYER, Franz, 29699 Bomlitz (DE); KNARR, Matthias, 29699 Bomlitz (DE)
(74) Representative: DuPont EMEA
(86) International application number: PCT/US2018/018605
(87) International publication number: WO 2018/164825

(56) References cited:
- EP-A1- 2 153 724
- WO-A1-2012/115781
- WO-A1-2012/115782
- KR-A- 20160 069 808
- US-A1- 2014 024 723
- RACHEL CROCKETT ET AL: "How Do Xanthan and Hydroxypropyl Methylcellulose Individually Affect the Physicochemical Properties in a Model Gluten-Free Dough?", JOURNAL OF FOOD SCIENCE, vol. 76, no. 3, 1 April 2011 (2011-04-01), pages E274-E282, XP055353729, US ISSN: 0022-1147, DOI: 10.1111/j.1750-3841.2011.02088.x
- ANNA-SOPHIE HAGER ET AL: "Influence of hydroxypropylmethylcellulose (HPMC), xanthan gum and their combination on loaf specific volume, crumb hardness and crumb grain characteristics of gluten-free breads based on rice, maize, teff and buckwheat", FOOD HYDROCOLLOIDS, vol. 32, no. 1, 1 July 2013 (2013-07-01), pages 195-203, XP055354108, NL ISSN: 0268-005X, DOI: 10.1016/j.foodhyd.2012.12.021
- Camino M. Mancebo: "Optimisation of rheological properties of gluten-free doughs with HPMC, psyllium and different levels of water - ScienceDirect", , 24 November 2014 (2014-11-24), XP055468321, Retrieved from the Internet: URL:https://www.sciencedirect.com/science/ article/pii/S0733521014001866 [retrieved on 2018-04-18]

## Description

### FIELD

This invention relates to a composition comprising gluten-free flour, to gluten-free food products, such as gluten-free bakery products.

The invention is defined by the appended set of claims.

### INTRODUCTION

Gluten is a protein complex found in Triticeae tribe of grains, which includes wheat, barley and rye. The gluten content in wheat flour provides desirable organoleptic properties, such as texture and taste, to innumerable bakery and other food products. Gluten also provides the processing qualities to both the commercial food manufacturer as well as the home baker. In general, it is very difficult to make bread using gluten-free flours such as rice flour and buckwheat flour. When dough is fermented with yeast, in the case of dough using wheat flour or rye flour containing gluten, the carbon dioxide gas generated by fermentation is retained by the gluten so that the gluten network is extended and the dough rises. In the case of dough using gluten-free flour, the carbon dioxide gas generated by fermentation is not retained within the dough so that the dough does not efficiently rise. Gluten is considered by many to be the "heart and soul" of bakery and other food products.

However, gluten has its drawbacks. The gluten protein complex, upon entering the digestive tract, breaks down into peptide chains like other protein sources, but the resulting gluten-related peptide chain length is longer than for other proteins. For this and other reasons, in some people, these longer peptides trigger an immune response commonly referred to as celiac disease. Celiac disease is characterized by inflammation, villous atrophy and cryptic hyperplasia in the intestine. The mucosa of the proximal small intestine is damaged by an immune response to gluten peptides that are resistant to digestive enzymes. This damage interferes with the body's ability to absorb vital nutrients such as proteins, carbohydrates, fat, vitamins, minerals, and in some cases, even water and bile salts. If left untreated, celiac disease increases the risk of other disorders, such as anemia, osteoporosis, short stature, infertility and neurological problems, and has been associated with increased rates of cancer and other autoimmune disorders. Accordingly, much research has been spent on finding gluten-free food products.

The use of hydroxypropyl methyl cellulose in dough composition comprising gluten-free flour is well known. For example, its use is described in European Patent Application Nos. EP 1 561 380 and EP 2 153 724, US patent application publication Nos. 2006/0088647, 2008/0038434 and US 2010/0291272, Korean patent application KR 2016 0069808, and by E. Gallagher et al. in Trends in Food Science & Technology 15 (2004) pp. 143 - 152.

US patent application publication No. 2005/0175756 discloses a dough composition comprising gluten-free flour, a water-soluble cellulose ether, and a low substituted cellulose ether having a total molar substitution of 0.05 - 1.0. The water -soluble cellulose ether is methyl cellulose (MC) containing 10 - 40 wt. % of methoxyl groups or hydroxypropyl methyl cellulose (HPMC) or hydroxyethyl methyl cellulose (HEMC) containing 10 - 40 wt. % of methoxyl groups and 3 - 30 wt.% of hydroxyalkyl groups. The low substituted cellulose ether is not soluble in water but in alkaline solution. The water -soluble cellulose ether and the low substituted cellulose ether should preferably have an average particle size of up to 100 µm. The bread made from the dough composition is said to have a good mouthfeel and a satisfactory volume and retains softness over time. Unfortunately, the patent application is silent on staling of the bread crumb over an extended time period of several days.

The incorporation of HPMC into gluten-free dough compositions indeed provides many advantages and hence has been studied in depth by the skilled artisans. In the article *"*How Do Xanthan and Hydroxypropyl Methyl Cellulose Individually Affect the Physiochemical Properties in a Model Gluten-Free Dough?", 2011, Journal of Food Science 76(3), Crockett et al. describe the individual effects of two hydroxypropyl methyl celluloses (HPMCs) and xanthan gum that were added individually at 2%, 3%, and 5% to rice cassava dough without the addition of alternative proteins. One studied HPMC was METHOCEL™ E15 having 28 - 30 % methoxyl substitution and 7 - 12 % hydroxypropyl substitution and a viscosity of 15 cp, measured at 2 wt.-% in water; it was designated as high methoxyl HPMC. The other studied HPMC was METHOCEL™ 4KM having 19 - 24 % methoxyl substitution and 7 - 12 % hydroxypropyl substitution and a viscosity of 4000 cp, measured at 2 wt.-% in water; it was designated as low methoxyl HPMC. In the bread, the final specific loaf volume increased with high methoxyl HPMC (2% to 5%) and low methoxyl HPMC (2%) but was depressed with increased addition of low methoxyl HPMC (5%) and xanthan (3% and 5%). Crumb hardness was decreased in high methoxyl HPMC loaves but was increased significantly in low methoxyl HPMC (5%) and xanthan (5%) formulations. From the gums studied, it was concluded that high methoxyl HPMC was the optimum hydrocolloid in the rice cassava gluten-free dough. As well, XP055354108 discloses the influence of hydroxypropylmethylcellulose (HPMC), xanthan gum and their combination on loaf specific volume, crumb hardness and crumb grain characteristics of gluten-free breads based on rice, maize, teff and buckwheat."

Although the specific volume of bread loaves produced from gluten-free dough compositions can be significantly increased by incorporation of high methoxyl HPMC, such as METHOCEL™ E15, it is still highly desirable to provide compositions which comprise gluten-free flour and which enable the production of bread loaves of further increased specific volume.

International Patent Application WO 2012/115782 discloses a composition which comprises a) a gluten-free cereal flour and b) a hydroxypropyl methylcellulose or methyl cellulose having particle sizes such that more than 50 weight percent are retained on a sieve of 150 micrometers mesh size and pass through a sieve of 420 micrometers mesh size. Preferred hydroxypropyl methylcelluloses contain from 10 to 40 percent, more preferably from 15 to 30 percent, and most preferably from 19 to 24 percent by weight of methoxyl groups and from 3 to 35 percent, more preferably from 4 to 32, and most preferably from 4 to 12 percent by weight of hydroxypropoxyl groups, as determined according to United States Pharmacopeia (USP 32). The viscosity of the methyl hydroxypropyl cellulose or methyl cellulose is from 300 to 200,000 mPa·s, preferably from 400 to 100,000 mPa·s, more preferably from 1000 to 20,000 mPa·s, and most preferably from 2000 to 20,000 mPa·s, determined in a 2% by weight aqueous solution at 20°C in a Haake VT550 Viscotester at 20°C and at a shear rate of 2.55 s⁻¹. WO 2012/115782 demonstrates the influence of the particle size of the performance in gluten-free bread of hydroxypropyl methylcellulose (HPMC) that has 22.8 wt.-% methoxyl groups, 8 wt. % hydroxypropoxyl groups and a viscosity of about 4000 mPa·s, determined in a 2% by weight aqueous solution at 20°C. When the HPMC has a particle size such that more than 50 weight percent of the HPMC particles are retained on a sieve of 150 micrometers and pass through a sieve of 420 micrometers, the gluten-free bread has a higher specific volume and a lower firmness than when a comparable HPMC of lower or larger particle size is into comparable flour compositions for gluten-free bread. The particle size of 150 - 420 micrometers is obtained by sieving. Unfortunately, the extra sieving step adds costs as it requires additional labor and equipment. Moreover, another use has to be found for HPMC of which the particle size is too small or too large to avoid a lot of waste.

International Patent Application PCT/US17/013472, filed 13 January 2017 and published on 03 August 2017 as WO 2017/131973 and claiming the first priority date of US Provisional Patent Application No. 62/287025 of 26 January 2016 discloses a composition which comprises a gluten-free cereal flour and two different types of hydroxypropyl methylcelluloses having different weight percentages of methoxyl groups and different viscosities, determined in a 2% by weight aqueous solution at 20°C. Due to the two different types of hydroxypropyl methylcelluloses, the molecular weight distribution of all hydroxypropyl methylcellulose molecules comprised in the composition is broad. Specifically, in Example 3 of the International Patent Application PCT/US17/013472, the measured M_{w}/Mₙ of all hydroxypropyl methylcellulose molecules comprised in the composition is 2.36 due to presence of two different types of hydroxypropyl methylcelluloses.

International Patent Application WO 2012/115781 discloses a composition which comprises a) a gluten-free cereal flour, b) a hydroxypropyl methylcellulose or methyl cellulose, and c) a carboxymethyl cellulose. The percent methoxyl groups and hydroxypropoxyl groups and the viscosities of the hydroxypropyl methylcellulose or methyl cellulose are as disclosed in International Patent Application WO 2012/115782. WO 2012/115781 demonstrates the performance in gluten-free bread of a combination of i) hydroxypropyl methylcellulose having 22.8 wt.-% methoxyl groups, 8 wt. % hydroxypropoxyl groups and a viscosity of about 4000 mPa·s, determined in a 2% by weight aqueous solution at 20°C, and ii) carboxymethyl cellulose powder having a degree of DS(carboxymethyl) of about 0.9, a viscosity of about 1000 mPa·s, determined in a 1% by weight aqueous solution at 25 °C. When a combination of components i) and ii) is incorporated into flour compositions for gluten-free bread, the gluten-free bread has a higher specific volume, a lower firmness and a higher springiness than when components i) and ii) are incorporated individually into comparable flour compositions for gluten-free bread.

It would be desirable to provide compositions which comprise gluten-free flour and which enable the production of bread loaves which have further increased specific volume, fine crumb structure, and which keep their shape well after cooling.

It is also known that quick staling - or increase in crumb firmness - upon storage of gluten-free bread for days is one of the most unpleasant properties of gluten-free bread (Tilman J. Schober, Manufacture of gluten-free specialty breads and confectionary products, Chapter 9.3.8 in: Eimear Gallagher (ed.), Gluten-free food science and technology; Wiley-Blackwell 2009, p.130ff). It would be even more desirable to provide compositions which comprise gluten-free flour and which enable the production of bread loaves which have a further increased specific volume, which keep their shape well after cooling and which have a bread crumb of low firmness, initially and/or upon storage.

### SUMMARY

One aspect of the present invention is a composition which comprises a) a gluten-free flour, and b) from 1.0 to 7.0 parts by weight, based on 100 parts by weight of the gluten-free flour, of a hydroxypropyl methylcellulose having a methoxyl content from 24.5 to 29.0 percent and a hydroxypropoxyl content of from 4.0 to 12.0 percent, each being based on the total weight of the hydroxypropyl methylcellulose, and a having a viscosity of from 60 to 250 mPa·s, determined in a 2% by weight solution in water at 20°C, wherein the M_{w}/Mₙ of all hydroxypropyl methylcellulose molecules comprised in the composition is not more than 2.25.

Another aspect of the present invention is a gluten-free bakery product comprising or made from the above-mentioned composition.

It has surprisingly been found that the composition of the present invention comprising a hydroxypropyl methylcellulose, which has a methoxyl content from 24.5 to 29.0 percent and a hydroxypropoxyl content of from 4.0 to 12.0 percent, each being based on the total weight of the hydroxypropyl methylcellulose, which has a viscosity of from 60 to 250 mPa·s, determined in a 2% by weight solution in water at 20°C, and wherein the M_{w}/Mₙ of all hydroxypropyl methylcellulose molecules comprised in the composition is not more than 2.25, is useful for producing food products, such as bakery products, and in particular bread, which have a high specific volume, keep their shape well after cooling and have bread crumb of low firmness after storage.

### BRIEF DESCRIPTION OF DRAWINGS

Fig. 1 represents photographs of sliced bread produced from the compositions of Examples 1-I, 2-I and 3-I and of Comparative Example C-I.
Fig. 2 represents photographs of sliced bread produced from the compositions of Examples 1-I and 2-I and of Comparative Examples A-I and B-I.
Fig. 3 represents photographs of sliced bread produced from the compositions of Examples 1-II, 2-II and 3-II and of Comparative Example C-II.
Fig. 4 represents photographs of sliced bread produced from the compositions of Examples 1-II and 2-II and of Comparative Examples A-II and B-II.

### DESCRIPTION OF EMBODIMENTS

One aspect of the present invention is a composition which comprises gluten-free flour. The term "gluten-free flour" as used herein is a powder made by grinding cereal grains or other seeds, roots (like cassava) or other parts of gluten-free plants. The term "a gluten-free flour" or "the gluten-free flour" is not limited to flour from a single source but also encompasses a mixture of flours of difference sources. The term "gluten-free flour" as used herein also encompasses starches in powder form extracted from gluten-free plants, such as tapioca starch or potato starch. This means that the composition itself and food products comprising or produced from the composition typically are also gluten-free. A typical method of making gluten-free food products consists of using only ingredients derived from gluten-free starting materials, rather than using flour derived from a gluten-containing grain, such as wheat. Accordingly, the composition of the present invention comprises a) a gluten-free flour, such as: amaranth flour, arrowroot flour, rice flour, buckwheat flour, corn flour, polenta flour, sweet potato flour, lentil flour, grape seed flour, garbanzo bean flour, garfava flour (a flour produced by Authentic Foods which is made from a combination of garbanzo beans and fava beans), millet flour, oat flour, potato flour, quinoa flour, Romano bean flour, sorghum flour, soy flour, sweet rice flour, tapioca flour, psyllium husk powder, powder produced from bamboo fibers or a combination of two or more such flours. Preferred are tapioca starch, rice flour, maize flour, potato starch, power produced from bamboo fibers and psyllium husk powder. Preferably the composition of the present invention comprises at least three, more preferably at least four, even more preferably at least five gluten-free flours selected from the group consisting of tapioca starch, rice flour, maize flour, potato starch, power produced from bamboo fibers and psyllium husk powder. Most preferably, the composition of the present invention comprises all six of these listed gluten-free flours.

The flour is preferably used in an amount of from 50 to 98 percent, more preferably from 65 to 90 percent, based on the total dry weight of the composition.

Furthermore, the composition of the present invention comprises b) from 1.0 to 7.0 parts by weight, based on 100 parts by weight of the gluten-free flour, of hydroxypropyl methylcellulose (HPMC) which has a content of methoxyl groups of from 24.5 to 29.0 percent and a content of hydroxypropoxyl groups of from 4.0 to 12.0 percent, each being based on the total weight of the hydroxypropyl methylcellulose. Preferably the HPMC has a content of methoxyl groups of from 24.5 to 28.0 percent, even more preferably from 24.5 to 27.5 percent, and most preferably from 24.5 to 27.0 percent. Preferably the HPMC has a content of hydroxypropoxyl groups of at least 5.0, more preferably of at least 6.0 percent, and most preferably at least 7.0 percent. Preferably the HPMC has a content of hydroxypropoxyl groups of up to 11.0 percent, more preferably of up to 10.5 percent, and most preferably of up to 9.7 percent. The content of methoxyl groups and hydroxypropoxyl groups in the HPMCs b) and c) are determined as described for "Hypromellose", United States Pharmacopeia and National Formulary, USP 35, pp 3467-3469.

The viscosity of the HPMC is from 60 to 250 mPa·s, preferably from 80 to 220 mPa·s, more preferably from 90 to 200 mPa·s, and most preferably from 110 to 180 mPa·s, determined in a 2% by weight solution in water at 20°C. The viscosity of the HPMC is determined as a 2% by weight solution in water at 20°C as described in the United States Pharmacopeia (USP 35, "Hypromellose", pages 423 - 424 and 3467 - 3469). As described in the United States Pharmacopeia, viscosities of less than 600 mPa·s are determined by Ubbelohde viscosity measurement. Descriptions on preparing the 2 wt. % HPMC solution and Ubbelohde viscosity measurement conditions are disclosed in the United States Pharmacopeia (USP 35, "Hypromellose", pages 423 - 424 and 3467 - 3469 and in ASTM D-445 and ISO 3105 referenced therein).

The total of all hydroxypropyl methylcellulose molecules comprised in the composition has a narrow molecular weight distribution. Specifically, the M_{w}/Mₙ of the totality of the hydroxypropyl methylcellulose (HPMC) molecules comprised in the composition is not more than 2.25, preferably not more than 2.0, more preferably not more than 1.9, even more preferably not more than 1.7, and most preferably not more than 1.5. By definition the M_{w}/Mₙ of the totality of the HPMC molecules comprised in the composition is at least 1.0. Typically the M_{w}/Mₙ is at least 1.1, and more typically at least 1.2. The M_{w}/Mₙ of the totality of the HPMC molecules incorporated in or to be incorporated in the composition comprising a gluten-free flour can be determined according to size exclusion chromatography (SEC) and multi angle laser light scattering (MALLS), as described in the Examples section.

Preferably the composition of the present invention does not comprise, based on 100 weight parts of gluten-free flour(s), more than 0.05 weight parts, more preferably not more than 0.02 weight parts, and most preferably not more than 0.01 weight parts or even no amount of a hydroxypropyl methylcellulose (HPMC) which has a content of methoxyl groups of from 19 to 24 percent and a content of hydroxypropoxyl groups of from 4 to 12 percent, each being based on the total weight of the HPMC and/or which has a viscosity of at least 300 mPa·s, measured as a 2% by weight solution in water at 20°C as described in the United States Pharmacopeia (USP 35, "Hypromellose", pages 423 - 424 and 3467 - 3469).

In one embodiment of the invention the HPMC has particle sizes such that more than 50 weight percent are retained on a sieve of 150 micrometers mesh size and pass through a sieve of 420 micrometers mesh size. However, unlike in WO 2012/115782 the particles sizes of the HPMC are not very critical. Sieving through a plurality of sieves is not necessary before using the HPMC in the composition comprising the gluten-free flour. The HPMC can have quite a broad particle size distribution. In one embodiment of the invention the HPMC has particle sizes such that i) more than 50 but less than 70 weight percent of the particles are retained on a sieve of 150 micrometers mesh size and pass through a sieve of 420 micrometers mesh size and ii) more than 30 weight percent of the particles pass through a sieve of 150 micrometers mesh size. In a preferred embodiment of the invention the HPMC has particle sizes such that i) less than 5 weight percent are retained on a sieve of 420 micrometers mesh size ii) more than 50 but less than 70 weight percent of the particles are retained on a sieve of 150 micrometers mesh size and pass through a sieve of 420 micrometers mesh size, iii) from 15 to 35 weight percent of the particles pass through a sieve of 150 micrometers mesh size and are retained on a sieve of 75 micrometers mesh size and the remaining particles pass through a sieve of 75 micrometers.

The amount of the HPMC b) is at least 1.0 parts, preferably at least 1.5 parts, and more preferably at least 2.0 part by weight, based on 100 parts by weight of the gluten-free flour(s). The amount of the HPMC b) is of up to 7.0 parts, preferably up to 5.0 parts and more preferably up to 4.0 parts by weight, based on 100 parts by weight of the gluten-free flour(s).

The inventors of the present patent application have surprisingly found that the composition of the present invention comprising the above-described HPMC is useful for producing food products, such as bakery products, and in particular bread, which have a higher specific volume and crumb of lower firmness than bread produced from comparable compositions which comprise HPMCs which are known for use in gluten-free bread, such as METHOCEL™ 4KM or METHOCEL™ E15. By the term "crumb of lower firmness" is meant crumb of reduced initial firmness and/or a reduced rate of firmness increase over storage time. Bakery products, and in particular bread, which are produced from the composition of the present invention also have a stable shape after cooling and storing, The shape stability after cooling can be visually assessed. E.g., the Example Section below shows that bread produced from some Comparative Examples comprising another HPMC than the HPMC utilized in the present invention have shrunk sides of the bread loaves upon cooling or coarse crumb structure, whereas bread loaves produced from the Examples of the present invention do not display this deficiency.

The composition of the present invention may comprise one or more optional additional ingredients, in addition to components a) and b). Preferably not more than 55 parts, more preferably not more than 45 parts by weight of optional ingredients other than water are incorporated in the composition of the present invention, based on 100 parts by weight of the gluten-free flour. Water can be added to the composition at a higher amount, as described further below.

The composition of the present invention may comprise a carboxymethyl cellulose as an optional additional ingredient. If a carboxymethyl cellulose is used, it is generally used in an amount of from 0.5 to 5.0 parts, preferably from 1.0 to 4.0 parts, more preferably from 1.5 to 2.5 parts by weight based on 100 parts by weight of the gluten-free flour(s). The term "carboxymethyl cellulose" or "CMC" as used herein encompasses cellulose substituted with groups of the formula -CH₂CO₂A, wherein A is hydrogen or a monovalent cation, such as K⁺ or preferably Na⁺. Preferably the carboxymethyl cellulose is in the form of its sodium salt, i.e., A is Na⁺. Typically, the carboxymethyl cellulose has a degree of substitution of from 0.20 to 0.95, preferably from 0.40 to 0.95, and more preferably from 0.65 to 0.95. The degree of substitution is the average number of OH groups that have been substituted in one anhydroglucose unit. It is determined according to ASTM D 1439-03 "Standard Test Methods for Sodium Carboxymethylcellulose; Degree of Etherification, Test Method B: Nonaqueous Titration". The treatment of a solid sample of the CMC with glacial acetic acid at boiling temperature releases an acetate ion quantity equivalent to the sodium carboxymethyl groups. These acetate ions can be titrated as a strong base in anhydrous acetic acid using a perchloric acid standard solution. The titration end point is determined potentiometrically. Other alkaline salts of carboxylic acids (e. g. sodium glycolate and disodium diglycolate) behave similarly and are co-titrated. The viscosity of the carboxymethyl cellulose generally is from 20 to 20,000 mPa·s, preferably from 25 to 12,000 mPa·s, more preferably from 100 to 5,000 mPa·s, and most preferably from 500 to 4000 mPa·s, determined in a 1% by weight solution in water at 20°C, using a Brookfield LVT viscosimeter, spindle No. 3, at 30 rpm.

Examples of other optional ingredients in gluten-free compositions and food products, besides components a) and b), are as follows: gums, including xanthan gum and guar gum; gelatin; eggs, such as egg white; egg replacers; sweeteners, including sugars, molasses, and honey; salt; yeast; chemical leavening agents, including baking powder and baking soda; fats, including margarine and butter; oils, including vegetable oil; vinegar; dough enhancer; dairy products, including milk, powdered milk, and yogurt; soy milk; nut ingredients, including almond meal, nut milk, and nut meats; seeds, including flaxseed, poppy seeds, and sesame seeds; fruit and vegetable ingredients, including fruit puree and fruit juice; and flavorings, including vanilla, cocoa powder, and cinnamon. However, this is not a comprehensive list of all ingredients that can be used to make gluten-free food products, such as gluten-free bakery products.

Water may be incorporated in the composition of the invention, for example, when dough or batter, such as bread dough, is prepared. It is generally added in an amount of from 50 to 250 parts by weight, preferably from 65 to 200 parts by weight, more preferably from 80 to 170 parts by weight, based on 100 parts by weight of the gluten-free flour.

The composition of the present invention is useful for preparing gluten-free food products, such as gluten-free bakery products, like breads, muffins, cakes, cookies or pizza crusts; gluten-free pasta, cereal products, crackers, and bar products. The composition of the present invention can be processed to the gluten-free food product in a conventional manner, for example by producing a dough or a batter from the composition of the present invention, subjecting it to molding or casting, optionally leavening the composition, and optionally baking it, depending on the kind of food product to be produced.

The food products of the present invention are an excellent replacement of traditional gluten-containing food products, such as food products containing wheat flour.

The following examples are for illustrative purposes only and are not intended to limit the scope of the present invention.

### EXAMPLES

Unless otherwise mentioned, all parts and percentages are by weight. In the Examples the following test procedures are used.

### Properties of hydroxypropyl methylcellulose (HPMC)

The content of methoxyl groups and of hydroxypropoxyl groups in HPMC are determined as described for "Hypromellose", United States Pharmacopeia and National Formulary, USP 35, pp 3467-3469.

The viscosity of HPMC is determined as a 2% by weight solution in water at 20°C as described in the United States Pharmacopeia (USP 35, "Hypromellose", pages 423 - 424 and 3467 - 3469). As described in the United States Pharmacopeia, viscosities of less than 600 mPa·s are determined by Ubbelohde viscosity measurement and viscosities of 600 mPa·s or more are determined using a Brookfield viscometer. Descriptions on preparing the 2 wt. % HPMC solution and both Ubbelohde and Brookfield viscosity measurement conditions are disclosed in the United States Pharmacopeia (USP 35, "Hypromellose", pages 423 - 424 and 3467 - 3469 and in ASTM D-445 and ISO 3105 referenced therein). The weight average molecular weight M_{w}, the number average molecular weight Mₙ and the molecular weight distribution M_{w}/Mₙ of the totality of HPMC molecules to be incorporated in the composition comprising a gluten-free flour was determined by size exclusion chromatography (SEC) and multi angle laser light scattering (MALLS). A 0.05 % aqueous NaN₃ solution was used as the mobile phase; this solution was also used as the solvent for the HPMC samples. In order to dissolve a HPMC sample, it was added to the 0.05 % aqueous NaN₃ aqueous solution, cooled to temperature of 4 - 6 °C and stirred until the HPMC was completely solved. A concentration from 0.3 - 2 mg HPMC/ml was chosen according to the viscosity of the HPMC sample. The flow rate of the mobile phase was set to 1.0 ml / min and the injection volume was programmed for a 100 µl injection. The column used was TSKgel GMPWXL from Tosoh Bioscience, held at room temperature. The detector used was DAWN HELEOS II from Wyatt Technology connected to a DRI Optilab rEX. The dn / dc (refractive index increment) used was 0,140 ml / g and the system was operated with the Astra software.

### Firmness of Bread Crumb

The firmness measured 1 day after baking is designated as "initial firmness". The firmness measured later than 1 day after baking is called firmness over storage time and is a measure for determining shelf life. In the time period between i) baking and cooling and ii) the firmness measurement the bread loaves are stored in polyethylene bags. A low initial firmness and/or a low firmness over storage time are desirable.

For texture analysis, a modified version of AACC method 74-09 (American Association of Cereal Chemists) was applied. Firmness of gluten-free bread was measured with a texture analyzer TA.XT plus (Stable Microsystems Ltd., Godalming, Surrey, UK) using the following settings:
- Sample preparation: bread slices of 25 mm thickness freshly cut from the center of loaves;
- 5 kg load cell;
- Round probe diameter 40 mm;
- Speed 1 mm/s.

The firmness is defined as force needed to press the probe 6.25 mm (25 % of the slice's thickness) into the bread crumb.

### HPMC of Example 1

The starting material for the HPMC production is Biofloc 96 pulp. When using this pulp, typically HPMC having a viscosity of about 4000 - 5000 mPa*s is produced, measured as a 2 wt.-% solution in water at 20 °C and a shear rate = 2,51 s⁻¹. In order to reach the desired viscosities of less than 400 mPa*s at corresponding conditions to these given above, oxygen degradation during the alkalization process is applied. During this alkalization process no vacuum or nitrogen is used in order to remove the resistant air / oxygen, which leads to a depolymerization of the pulp.

The hydroxypropyl methylcellulose (HPMC) is produced according to the following procedure. Finely ground wood cellulose pulp Biofloc 96 is loaded into a jacketed, agitated 5 1 autoclave reactor. The reactor is evacuated but not purged with nitrogen to remove oxygen at the beginning. 50 weight percent aqueous solution of sodium hydroxide is sprayed onto the cellulose in an amount of 4.0 moles of sodium hydroxide per mole of anhydroglucose units in the cellulose and the temperature is adjusted to 60°C. After stirring the mixture of aqueous sodium hydroxide solution and cellulose for about 60 minutes at 60°C, the temperature is decreased to 40 °C and the reactor is evacuated and purged with nitrogen to remove oxygen and then evacuated again and further stirred for 15 min at 40 °C. Afterwards 1.5 moles of dimethyl ether, 4.5 moles of methyl chloride and 1 mole of propylene oxide per mole of anhydroglucose units are added to the reactor. The contents of the reactor are then heated in 40 min to 80°C. After having reached 80°C, the reaction is allowed to proceed for 105 min.

After the reaction, the reactor is vented and cooled down to about 50°C. The contents of the reactor are removed and transferred to a tank containing hot water. The crude HPMC is then neutralized with formic acid and washed chloride free with hot water (assessed by AgNO3 flocculation test), cooled to room temperature and dried at 55 °C in an air-swept drier. The material is then ground using an Alpine UPZ mill using a 0.3 mm screen.

### HPMC of Example 2

The HPMC of Example 2 is produced according to the procedure described for Example 1, except that the amount of 50 weight percent aqueous solution of sodium hydroxide is 3.5 moles per mole of anhydroglucose units and the amount of methyl chloride is 4.0 moles per mole of anhydroglucose units.

### HPMC of Example 3

The HPMC of Example 3 is produced according to the procedure described for Example 1, except that the amount of 50 weight percent aqueous solution of sodium hydroxide is 3.0 moles per mole of anhydroglucose units and the amount of methyl chloride is 3.5 moles per mole of anhydroglucose units.

The properties of the produced HPMCs of Examples 1 - 3 are listed in Table 1 below.

### HPMC of Comparative Examples A to C

The HPMC of Comparative Example A has a methoxyl content of from 19 to 24 percent, a hydroxypropoxyl content of from 7 to 12.0 percent and a viscosity of 3000 to 5000 mPa·s, determined in a 2% by weight solution in water at 20°C. The HPMC of Comparative Example A is commercially available from The Dow Chemical Company as METHOCEL™ K4M cellulose ether; it is abbreviated as "K4M" in Tables 1 and 3 below.

The HPMC of Comparative Example B has a methoxyl content of from 28 to 30 percent, a hydroxypropoxyl content of from 7 to 12.0 percent and a viscosity of about 19 mPa·s, determined in a 2% by weight solution it water at 20°C. The HPMC is commercially available from The Dow Chemical Company as METHOCEL™ E19 cellulose ether; it is abbreviated as "E19" in Tables 1 and 3 below.

The HPMC of Comparative Example C has a methoxyl content of from 27 to 30 percent, a hydroxypropoxyl content of from 4 to 7.5 percent and a viscosity of about 50 mPa·s, determined in a 2% by weight solution it water at 20°C. The HPMC c) is commercially available from The Dow Chemical Company as METHOCEL™ F50 cellulose ether; it is abbreviated as "F50" in Tables 1 and 3 below.

The methoxyl content, hydroxypropoxyl content and viscosity of the utilized samples of METHOCEL™ K4M, METHOCEL™ E19 and METHOCEL™ F50 were determined according to the procedures described further above. They are listed in Table 1 below.

**Table 1**

| **(Comp.) Example** | **1** | **2** | **3** | **A** | **B** | **c** | **D** |
|---|---|---|---|---|---|---|---|
| **Abbreviation** | **Ex. 1** | **Ex. 2** | **Ex. 3** | **K4M** | **E19** | **F50** | 40 % K4M + 60 % E19 |
| DS(methyl) | 1.78 | 1.70 | 1.57 | 1.43 | 1.85 | 1.85 | - |
| Methoxyl in % | 27.9 | 26.6 | 24.5 | 22.7 | 28.7 | 29.0 | - |
| MS(hydroxypropyl) | 0.19 | 0.21 | 0.25 | 0.22 | 0.21 | 0.16 | - |
| Hydroxypropoxyl in % | 7.1 | 7.9 | 9.5 | 8.6 | 7.8 | 6.2 | -- |
| Viscosity (mPa·s) | 98 | 117 | 151 | 3890 | 15 | 51 | - |
| Mn (g / mol) | 72900 | 81400 | 90900 | 187200 | 35800 | 56300 | 61'900 |
| Mw (g / mol) | 96500 | 108000 | 118300 | 302000 | 46700 | 78900 | 146'000 |
| Mw / Mn | 1.32 | 1.33 | 1.30 | 1.61 | 1.30 | 1.40 | 2.36 |

For comparative purposes (Comparative Example D) the M_{w} / Mₙ of a blend of 40 wt. % of K4M and 60 wt. % of E19 as in Example 3 of the International Patent Application PCT/US17/013472 was determined. The measured M_{w}/Mₙ was 2.36 due to presence of two different types of hydroxypropyl methylcelluloses.

The HPMCs of Examples 1 - 3 and Comparative Examples B and C all have particle sizes such that i) less than 5 weight percent are retained on a sieve of 420 micrometers mesh size, ii) more than 50 but less than 70 weight percent of the particles are retained on a sieve of 150 micrometers mesh size and pass through a sieve of 420 micrometers mesh size, iii) from 15 to 35 weight percent of the particles pass through a sieve of 150 micrometers mesh size and are retained on a sieve of 75 micrometers mesh size and the remaining particles pass through a sieve of 75 micrometers. Of the HPMC of Comparative Example A less than 50 weight percent are retained on a sieve of 150 micrometers mesh size. None of the HPMC samples have been subjected to sieving through a plurality of sieves.

Dough is prepared from the ingredients as listed in Tables 2 and 3 below. The sodium carboxymethyl cellulose listed in Table 2 below has a degree of substitution of 0.9 and a viscosity of 3000 to 4000 mPa·s, determined in a 1% by weight solution in water at 20°C, using a Brookfield LVT viscometer, spindle No. 3, at 30 rpm.

**Table 2**

| **Dough Recipe for Gluten-free Bread** | | |
|---|---|---|
| | **Recipe I** | **Recipe II** |
| Gluten-free flour and HPMC | Weight parts | Weight parts |
| Tapioca starch | 10.61 | 10.61 |
| Rice flour | 9.09 | 9.09 |
| Powder produced from bamboo fibers | 5.68 | 5.68 |
| Potato starch | 3.41 | 3.41 |
| Psyllium husk powder | 3.03 | 3.03 |
| Maize flour | 2.27 | 2.27 |
| HPMC, as listed in Table 3 | 1.00 | 1.00 |
| additional Ingredients | Weight parts | Weight parts |
| Water | 50.97 | 50.97 |
| Egg white powder | 4.17 | 4.17 |
| Sunflower oil | 3.79 | 3.79 |
| Sugar | 2.27 | 2.27 |
| Compressed fresh yeast | 1.90 | 1.90 |
| Salt (NaCl) | 1.14 | 1.14 |
| Sodium carboxymethyl cellulose (WALOCEL™ CRT 30000PA) | 0.67 | -- |
| **Sum** | **100** | **99.33** |

### Specific Volume and Firmness of Bread Crumb

All the dry ingredients listed in Tables 2 and 3 are weighted into a container and mixed well. The liquid ingredients are added into the dry ingredients under high shear. The dough is kneaded for 6 min and then transferred to a greased loaf pan for proofing at 32 °C and 80% relative humidity for one hour and 15 min. After that, it is baked at 210 °C for 50 min. The specific volume of the bread is analyzed after cooling the bread and storing for 24 hours in a polyethylene bag. The bread is sliced and photographs of the sliced bread in the middle of the loaf are taken shortly after measuring the specific volume of the bread i.e., one day after baking. The firmness of the bread crumb is measured as described above and listed in Table 4 below.

**Table 3**

| (Comparative) Example | Recipe No. | HPMC, wt.-% based on dough recipe | Specific Volume (cm3/g) |
|---|---|---|---|
| 1-I | I | 1.0 % of Ex. 1 | 3.96 |
| 2-I | I | 1.0 % of Ex. 2 | 4.21 |
| 3-I | I | 1.0 % of Ex. 3 | 4.25 |
| Comp. Ex. A-I | I | 1.0 % K4M | 3.24 |
| Comp. Ex. B-I* | I | 1.0 % E19 | 3.47 |
| Comp. Ex. C-I* | I | 1.0 % F50 | 4.19 |
| 1-II | II | 1.0 % of Ex. 1 | 3.74 |
| 2-II | II | 1.0 % of Ex. 2 | 4.08 |
| 3-II | II | 1.0 % of Ex. 3 | 3.80 |
| Comp. Ex. A-II | II | 1.0 % K4M | 3.07 |
| Comp. Ex. B-II* | II | 1.0 % E19 | 3.14 |
| Comp. Ex. C-II* | II | 1.0 % F50 | 4.28 |

| | | | |
|---|---|---|---|
| * Comparative, but not prior art | | | |

The results in Table 3 above illustrate that gluten-free breads prepared from a composition of the present invention which comprise HPMC of Examples 1 to 3, have a higher specific volume than gluten-free breads prepared from comparable compositions comprising the same amount of a HPMC of Comparative Examples A and B, regardless whether recipe I and II is used as bread recipe, i.e., with or without the use of carboxymethyl cellulose.

### Visual Appearance

Each bread is sliced and photographs of the sliced bread in the middle of the loaf are taken shortly after measuring the specific volume of the bread i.e., one day after baking.

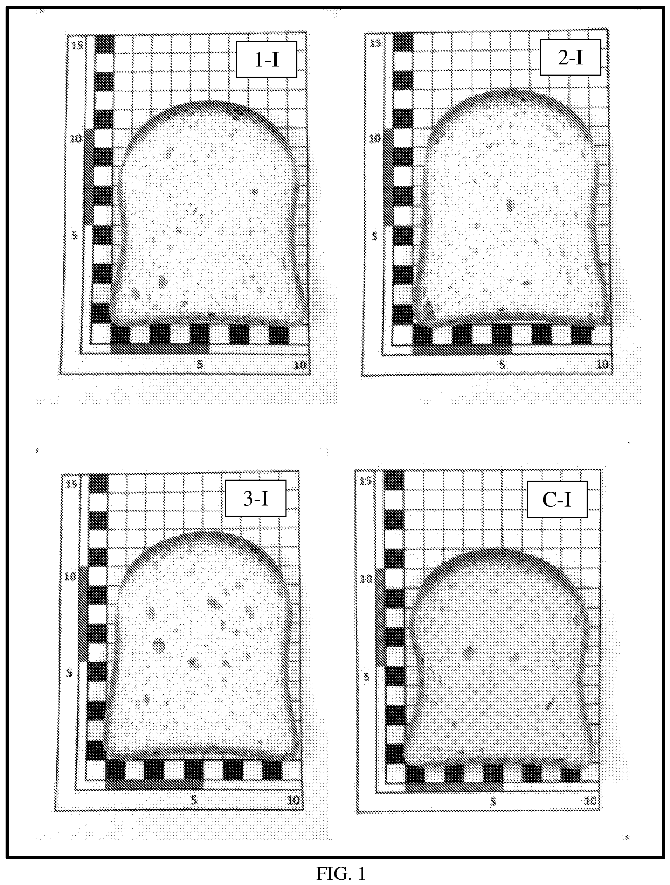

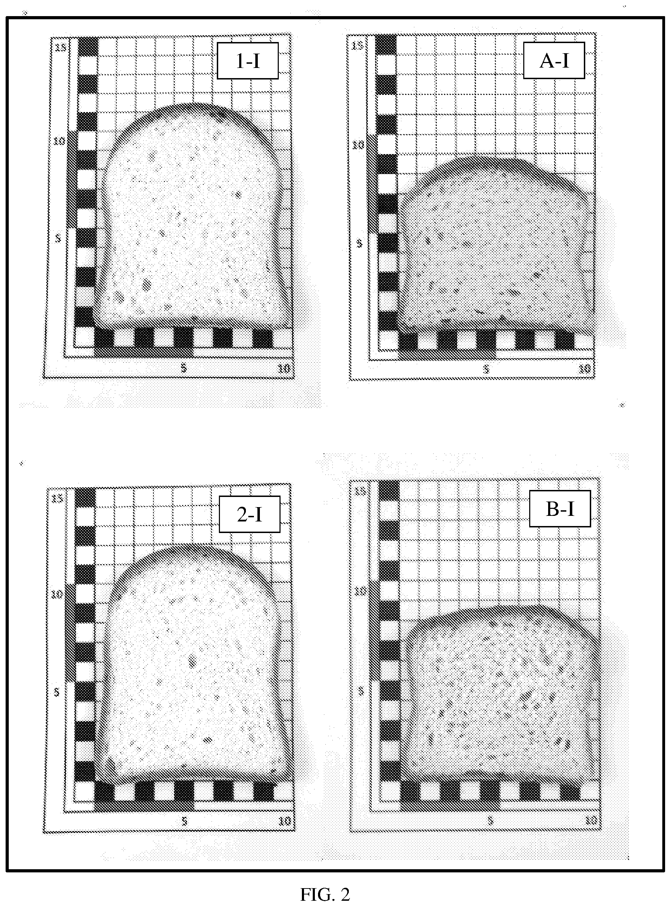

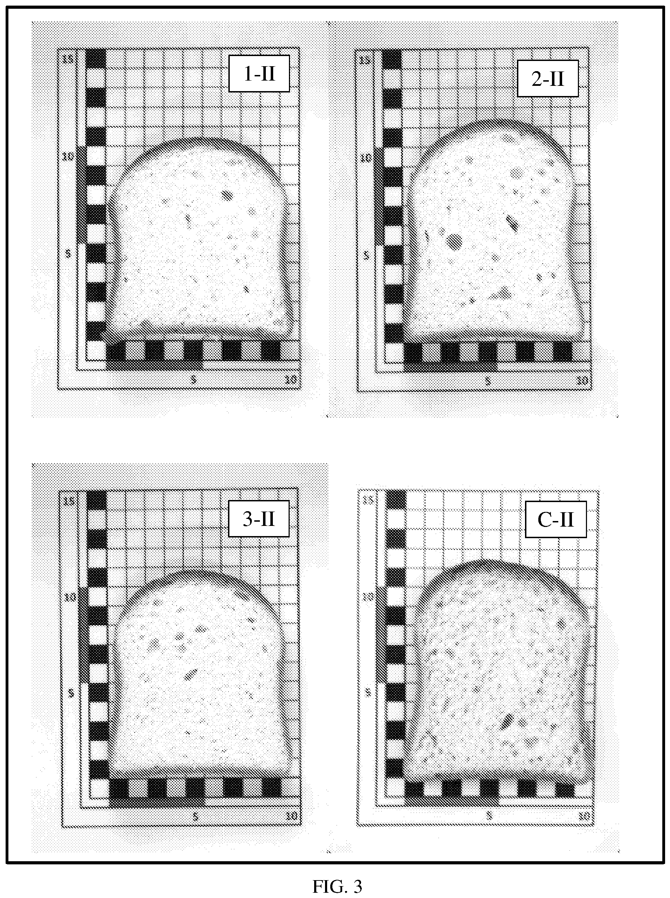

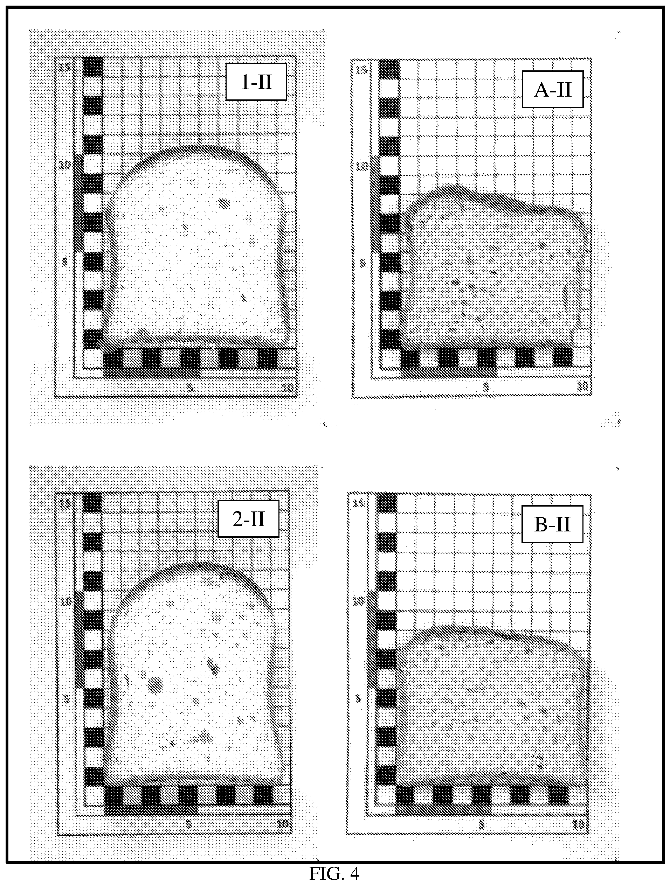

Figure 1 represents photographs of sliced bread produced from the compositions of Examples 1-I, 2-I and 3-I and of Comparative Example C-I. Figure 2 represents photographs of sliced bread produced from the compositions of Examples 1-I and 2-I and of Comparative Examples A-I and B-I. Figure 3 represents photographs of sliced bread produced from the compositions of Examples 1-II, 2-II and 3-II and of Comparative Example C-II. Figure 4 represents photographs of sliced bread produced from the compositions of Examples 1-II and 2-II and of Comparative Examples A-II and B-II.

Figure 2 illustrates the direct comparisons between Example 1-I and Comparative Example A-I and between Example 2-I and Comparative Example B-I. Figure 4 illustrates the direct comparisons between Example 1-II and Comparative Example A-II and between Example 2-II and Comparative Example B-II. These comparisons visualize the effect that the HPMCs of Examples 1 and 2 have in gluten-free breads as compared to the HPMCs of Comparative Examples A and B. Regardless whether bread recipe I or II is used, the increased specific volume of bread prepared from compositions of the present invention is self-evident. The HPMC of Example 3 has a very similar effect as the HPMC of Example 2, as illustrated by Figures 1 and 3, which allow a direct comparison.

Moreover, the breads comprising HPMC of Examples 1 to 3 have fine pores without a significant amount of large holes, are well sliceable, do not display significantly shrunk sides of the bread loaves and keep their shape well after cooling. These properties are illustrated by the photographs of sliced bread produced from the compositions of Examples 1-I, 2-I and 3-I and of Examples 1-II, 2-II and 3-II, respectively, in Figures 1 - 4.

Gluten-free breads prepared from a composition comprising a HPMC of Comparative Example C have similar or somewhat higher specific volumes than gluten-free breads prepared from compositions comprising a HPMC of Examples 1 to 3. However, the breads prepared from compositions comprising a HPMC of Comparative Example C display significantly shrunk sides or coarse crumb structure of the bread loaves upon cooling. This is not accepted by consumers. This is illustrated by the photographs of sliced bread produced from the compositions of Comparative Examples C-I and C-II, respectively in Figures 1 and 3.

Figure 1 illustrates the direct comparison between Examples 1-I, 2-I and 3-I and Comparative Example C-I. The sides of the broad loaf are considerably more shrunk in Comparative Example C-I than in Examples 1-I, 2-I and 3-1.

Figure 3 illustrates the direct comparison between Examples 1-II, 2-II and 3-II and Comparative Example C-II. The crumb structure is considerably coarser in Comparative Example C-II than in Examples 1-II, 2-II and 3-II. Moreover, the slice of bread of Comparative Example C-II is not symmetrical.

Hence, breads prepared from dough of the present invention provide an optimum combination of high specific volume and good visual properties, such as a regular shape of the bread loaves.

### Firmness of Bread Crumb

The firmness of bread crumb of gluten-free breads of Example 1 - 3 is compared with the firmness of bread crumb of gluten-free breads of Comparative Examples A - C. The firmness of the bread crumb is measured as described above and listed in Table 4.

**Table 4**

| (Comparative) Example | Recipe No. | HPMC, wt.-% based on dough recipe | Firmness of bread crumb (g / N) | | |
|---|---|---|---|---|---|
| | | | Initial (1 day after baking) | 7 day after baking | 14 day after baking |
| 1-I | I | 1.0 % of Ex. 1 | 516 g/5.1 N | 731 g/7.2 N | 1005 g/9.9 N |
| 2-I | I | 1.0 % of Ex. 2 | 325 g/3.2 N | 624 g/6.1 N | 1079 g/10.6 N |
| 3-I | I | 1.0 % of Ex. 3 | 356 g/3.5 N | 677 g/6.6 N | 878 g/8.6 N |
| Co. Ex. A-I | I | 1.0 % K4M | 811 g/ 8.0 N | 1149 g/ 11.2 N | 1724 g/ 16.9 N |
| Co. Ex. B-I | I | 1.0 % E19 | 528 g/5.2 N | 857 g/8.4 N | 1021 g/10.0 N |
| Co. Ex. C-I* | I | 1.0 % F50 | 396 g / 3.9 N | 544 g/5.3 N | 945 g/9.3 N |
| 1-II | II | 1.0 % of Ex. 1 | 654 g/6.4 N | 775 g/7.6 N | 1216 g/11.9 N |
| 2-II | II | 1.0 % of Ex. 2 | 614 g/6.0 N | 642 g/6.3 N | 985 g/9.6 N |
| 3-II | II | 1.0 % of Ex. 3 | 516 g/5.0 N | 556 g/5.5 N | 943 g/9.3 N |
| Co. Ex. A-II | II | 1.0 % K4M | 923 g /9.1 N | 1145 g/11.2 N | 1669 g /16.4 N |
| Co. Ex. B-II | II | 1.0 % E19 | 742 g/7.3 N | 1240 g /12.2 N | 1268 g /12.4 N |
| Co. Ex. C-II* | II | 1.0 % F50 | 334 g / 3.3 N | 447 g / 4.4 N | 491 g/4.8 N |

| | | | | | |
|---|---|---|---|---|---|
| * comparative, but not prior art | | | | | |

The results in Table 4 above illustrate that gluten-free bread prepared from the compositions of the present invention has much less tendency to staling - or increase in crumb firmness - upon storage of the bread than bread produced from the compositions comprising HPMC of Comparative Example A. The gluten-free bread prepared from the compositions of the present invention has also much less tendency to staling upon storage for up to 7 days than bread produced from the compositions comprising HPMC of Comparative Example B.

Bread crumb produced from compositions comprising HPMC of Comparative Example C is generally even softer (less firm) than bread crumb produced from compositions comprising HPMCs of Examples 1 - 3. However, the breads prepared from compositions comprising HPMC of Comparative Example C display significantly shrunk sides of the bread loaves or coarse crumb structure upon cooling, as discussed further above. This is not accepted by consumers.

## Claims

1. A composition comprising
a) a gluten-free flour, and
b) from 1.0 to 7.0 parts by weight, based on 100 parts by weight of the gluten-free flour, of a hydroxypropyl methylcellulose having a methoxyl content from 24.5 to 29.0 percent and a hydroxypropoxyl content of from 4.0 to 12.0 percent, each being based on the total weight of the hydroxypropyl methylcellulose, the content of methoxyl groups and hydroxypropoxyl groups in the HPMC being determined as described for "Hypromellose", United States Pharmacopeia and National Formulary, USP 35, pp 3467-3469,
and having a viscosity of from 60 to 250 mPa-s, determined in a 2% by weight solution in water at 20°C, as described in the United States Pharmacopeia, USP 35, "Hypromellose", pages 423-424 and 3467-3469,
wherein the Mw/Mn of all hydroxypropyl methylcellulose molecules comprised in the composition is not more than 2.25, being determined according to size exclusion chromatography (SEC) and multi angle laser light scattering (MALLS).

2. The composition of claim 1 wherein the hydroxypropyl methylcellulose has a viscosity of from 90 - 200 mPa·s, determined in a 2% by weight solution in water at 20°C.

3. The composition of claim 2 wherein the hydroxypropyl methylcellulose has a viscosity of from 110 - 180 mPa·s, determined in a 2% by weight solution in water at 20°C.

4. The composition of any one of claims 1 to 3, wherein the M_{w}/Mₙ of all hydroxypropyl methylcellulose molecules comprised in the composition is not more than 2.0.

5. The composition of any one of claims 1 to 4 wherein the hydroxypropyl methylcellulose has a methoxyl content from 24.5 to 28.0 percent.

6. The composition of any one of claims 1 to 5 wherein the hydroxypropyl methylcellulose has a hydroxypropoxyl content of from 5.0 to 11.0 percent.

7. The composition of any one of claims 1 to 6 wherein the hydroxypropyl methylcellulose has a hydroxypropoxyl content of from 6.0 to 10.5 percent.

8. The composition of any one of claims 1 to 7 wherein the amount of the hydroxypropyl methylcellulose is from 1.5 to 5.0 parts by weight, based on 100 parts by weight of the gluten-free flour.

9. The composition of claim 8 wherein the amount of the hydroxypropyl methylcellulose is from 2.0 to 4.0 parts by weight, based on 100 parts by weight of the gluten-free flour.

10. The composition of any one of claims 1 to 9 comprising at least three gluten-free flours selected from the group consisting of tapioca starch, rice flour, maize flour, potato starch, power produced from bamboo fibers and psyllium husk powder.

11. The composition of any one of claims 1 to 10 additionally comprising water and being in the form of a dough.

12. The composition of claim 11 wherein the amount of water is from 50 to 250 parts by weight, based on 100 parts by weight of the gluten-free flour.

13. A gluten-free bakery product comprising or made from the gluten-free composition of any one of claims 1 to 12.

14. The gluten-free bakery product of claim 13 being selected from the group consisting of gluten-free breads, gluten-free muffins, gluten-free cakes, gluten-free cookies, and gluten-free pizza crusts.

## Patentansprüche

1. Zusammensetzung, umfassend
a) ein glutenfreies Mehl, und
b) 1,0 bis 7,0 Gewichtsteile, bezogen auf 100 Gewichtsteile des glutenfreien Mehls, einer Hydroxypropylmethylcellulose mit einem Methoxylgehalt von 24,5 bis 29,0 Prozent und einem Hydroxypropoxylgehalt von 4,0 bis 12,0 Prozent, der jeweils auf dem Gesamtgewicht der Hydroxypropylmethylcellulose beruht, wobei der Gehalt an Methoxylgruppen und Hydroxypropoxylgruppen in der HPMC gemäß Beschreibung für "Hypromellose", United States Pharmacopeia and National Formulary, USP 35, S. 3467-3469, bestimmt wird,
und mit einer Viskosität von 60 bis 250 mPa s, bestimmt in einer 2-gewichtsprozentigen Lösung in Wasser bei 20 °C, gemäß Beschreibung in der United States Pharmacopeia, USP 35, "Hypromellose", Seiten 423-424 und 3467-3469,
wobei das M_{w}/Mₙ sämtlicher Hydroxypropylmethylcellulosemoleküle, die in der Zusammensetzung umfasst sind, nicht mehr als 2,25 beträgt, wobei es gemäß Größenausschlusschromatographie (SEC) und Mehrwinkel-Laserlichtstreuung (MALLS) bestimmt wird.

2. Zusammensetzung nach Anspruch 1, wobei die Hydroxypropylmethylcellulose eine Viskosität von 90 - 200 mPa·s, bestimmt in einer 2-gewichtsprozentigen Lösung in Wasser bei 20 °C, aufweist.

3. Zusammensetzung nach Anspruch 2, wobei die Hydroxypropylmethylcellulose eine Viskosität von 110 - 180 mPa·s, bestimmt in einer 2-gewichtsprozentigen Lösung in Wasser bei 20 °C, aufweist.

4. Zusammensetzung nach einem der Ansprüche 1 bis 3, wobei das M_{w}/Mₙ sämtlicher Hydroxypropylmethylcellulosemoleküle, die in der Zusammensetzung umfasst sind, nicht mehr als 2,0 beträgt.

5. Zusammensetzung nach einem der Ansprüche 1 bis 4, wobei die Hydroxypropylmethylcellulose einen Methoxylgehalt von 24,5 bis 28,0 Prozent aufweist.

6. Zusammensetzung nach einem der Ansprüche 1 bis 5, wobei die Hydroxypropylmethylcellulose einen Hydroxypropoxylgehalt von 5,0 bis 11,0 Prozent aufweist.

7. Zusammensetzung nach einem der Ansprüche 1 bis 6, wobei die Hydroxypropylmethylcellulose einen Hydroxypropoxylgehalt von 6,0 bis 10,5 Prozent aufweist.

8. Zusammensetzung nach einem der Ansprüche 1 bis 7, wobei die Menge der Hydroxypropylmethylcellulose 1,5 bis 5,0 Gewichtsteile, bezogen auf 100 Gewichtsteile des glutenfreien Mehls, beträgt.

9. Zusammensetzung nach Anspruch 8, wobei die Menge der Hydroxypropylmethylcellulose 2,0 bis 4,0 Gewichtsteile, bezogen auf 100 Gewichtsteile des glutenfreien Mehls, beträgt.

10. Zusammensetzung nach einem der Ansprüche 1 bis 9, die mindestens drei glutenfreie Mehle umfasst, die aus der Gruppe ausgewählt sind, die aus Tapiokastärke, Reismehl, Maismehl, Kartoffelstärke, Pulver, das aus Bambusfasern hergestellt ist, und Flohsamenschalenpulver besteht.

11. Zusammensetzung nach einem der Ansprüche 1 bis 10, die zusätzlich Wasser umfasst und in der Form eines Teigs ist.

12. Zusammensetzung nach Anspruch 11, wobei die Menge an Wasser 50 bis 250 Gewichtsteile, bezogen auf 100 Gewichtsteile des glutenfreien Mehls, beträgt.

13. Glutenfreie Backware, die die glutenfreie Zusammensetzung nach einem der Ansprüche 1 bis 12 umfasst oder aus dieser gemacht ist.

14. Glutenfreie Backware nach Anspruch 13, die aus der Gruppe ausgewählt ist, die aus glutenfreien Broten, glutenfreien Muffins, glutenfreien Kuchen, glutenfreien Plätzchen und glutenfreien Pizzaböden besteht.

## Revendications

1. Composition comprenant:
a) une farine sans gluten, et
b) de 1,0 à 7,0 parties en poids, sur la base de 100 parties en poids de la farine sans gluten, d'une hydroxypropylméthylcellulose ayant une teneur en méthoxyle de 24,5 à 29,0 pour cent et une teneur en hydroxypropoxyle de 4,0 à 12,0 pour cent, chacune étant basée sur le poids total de l'hydroxypropylméthylcellulose, la teneur en groupes méthoxyles et en groupes hydroxypropoxyles dans la HPMC étant déterminée comme il est décrit pour « Hypromellose », United States Pharmacopeia and National Formulary, USP 35, pp 3467-3469,
et ayant une viscosité de 60 à 250 mPa-s, déterminée dans une solution à 2% en poids dans l'eau à 20°C, comme il est décrit dans United States Pharmacopeia, USP 35, « Hypromellose », pages 423-424 et 3467-3469,
où le rapport Mw/Mn de toutes les molécules d'hydroxypropylméthylcellulose comprises dans la composition n'est pas de plus de 2,25, étant déterminé selon une chromatographie d'exclusion sur gel (SEC) et une diffusion de lumière laser multi angle (MALLS).

2. Composition selon la revendication 1, dans laquelle l'hydroxypropylméthylcellulose a une viscosité de 90 - 200 mPa-s, déterminée dans une solution à 2% en poids dans l'eau à 20°C.

3. Composition selon la revendication 2, dans laquelle l'hydroxypropylméthylcellulose a une viscosité de 110 - 180 mPa-s, déterminée dans une solution à 2% en poids dans l'eau à 20°C.

4. Composition selon l'une quelconque des revendications 1 à 3, dans laquelle le rapport Mw/Mn de toutes les molécules d'hydroxypropylméthylcellulose comprises dans la composition n'est pas de plus de 2,0.

5. Composition selon l'une quelconque des revendications 1 à 4, dans laquelle l'hydroxypropylméthylcellulose a une teneur en méthoxyle de 24,5 à 28,0 pour cent.

6. Composition selon l'une quelconque des revendications 1 à 5, dans laquelle l'hydroxypropylméthylcellulose a une teneur en hydroxypropoxyle de 5,0 à 11,0 pour cent.

7. Composition selon l'une quelconque des revendications 1 à 6, dans laquelle l'hydroxypropylméthylcellulose a une teneur en hydroxypropoxyle de 6,0 à 10,5 pour cent.

8. Composition selon l'une quelconque des revendications 1 à 7, dans laquelle la quantité de l'hydroxypropylméthylcellulose est de 1,5 à 5,0 parties en poids, sur la base de 100 parties en poids de la farine sans gluten.

9. Composition selon la revendication 8, dans laquelle la quantité de l'hydroxypropylméthylcellulose est de 2,0 à 4,0 parties en poids, sur la base de 100 parties en poids de la farine sans gluten.

10. Composition selon l'une quelconque des revendications 1 à 9 comprenant au moins trois farines sans gluten choisies dans le groupe constitué de: fécule de manioc, farine de riz, farine de maïs, fécule de pomme de terre, poudre produite à partir de fibres de bambou et poudre d'enveloppe de psyllium.

11. Composition selon l'une quelconque des revendications 1 à 10 comprenant en outre de l'eau et qui est sous la forme d'une pâte.

12. Composition selon la revendication 11, dans laquelle la quantité d'eau est de 50 à 250 parties en poids, sur la base de 100 parties en poids de la farine sans gluten.

13. Produit de boulangerie sans gluten comprenant ou fait à partir de la composition sans gluten selon l'une quelconque des revendications 1 à 12.

14. Produit de boulangerie sans gluten selon la revendication 13 qui est choisi dans le groupe constitué de: pains sans gluten, muffins sans gluten, gâteaux sans gluten, biscuits sans gluten et pâtes à pizza sans gluten.
